# EUROPÄISCHE PATENTSCHRIFT

(11) **EP 1 525 684 B1**
(45) Veröffentlichungstag und Bekanntmachung des Hinweises auf die Patenterteilung: **07.12.2005**
(21) Anmeldenummer: 03787636.4
(22) Anmeldetag: 07.07.2003
(51) Int. Cl.: H04B 10/18

(54) **OPTISCHES ÜBERTRAGUNGSSYSTEM ZUR ÜBERTRAGUNG VON OPTISCHEN SIGNALEN MIT UNTERSCHIEDLICHEN ÜBERTRAGUNGSRATEN**
OPTICAL TRANSMISSION SYSTEM FOR TRANSMITTING OPTICAL SIGNALS HAVING DIFFERENT TRANSMISSION RATES
SYSTEME POUR TRANSMETTRE DES SIGNAUX OPTIQUES A DIFFERENTS DEBITS

(30) Priorität: 31.07.2002 DE 10234918
(43) Veröffentlichungstag der Anmeldung: 27.04.2005
(73) Patentinhaber: SIEMENS AKTIENGESELLSCHAFT, 80333 München (DE)
(72) Erfinder: MEISSNER, Eckhard, 85604 Zorneding (DE); LEHMANN, Gottfried, 85238 Petershausen (DE)
(86) Internationale Anmeldenummer: PCT/DE2003/002270
(87) Internationale Veröffentlichungsnummer: WO 2004/017542

(56) Entgegenhaltungen:
- GB-A- 2 371 160
- US-A- 5 877 879

## Beschreibung

Die Erfindung betrifft ein optisches Übertragungssystem zur Übertragung von optischen Signalen bestehend aus N optischen Faserstreckenabschnitten mit jeweils einer optischen Faser und einer Dispersionskompensationseinheit, bei dem zur Übertragung von eine erste Datenübertragungsrate aufweisenden ersten optischen Signalen die Kompensationsbeträge der ersten bis N-ten Dispersionskompensationseinheiten derart dimensioniert sind, daß der erste bis N-te Faserstreckenabschnitt jeweils um annähernd denselben Unterkompensationsbetrag unterkompensiert ist.

In optischen Übertragungssystemen mit hohen Datenübertragungsraten, wie beispielsweise bei den nach dem WDM-Prinzip (Wavelength Division Multiplexing) arbeitenden optischen Übertragungssystemen, werden durch die bei der Übertragung von optischen Signalen über optische Fasern auftretende chromatische Faserdispersion und weiteren nichtlinearen Effekten wie der Selbstmodulation (SPM) oder der Kreuzphasenmodulation (EXPM) Verzerrungen in den zu übertragenden, optischen Signalen hervorgerufen. Derartige Verzerrungen der zu übertragenden, optischen Signale sind unter anderem abhängig von der optischen Eingangsleistung des optischen Signals, der Datenübertragungsrate und von dem zur Übertragung verwendeten Fasertyp. Die regenerationsfrei überbrückbare Übertragungsreichweite eines optischen Übertragungssystem wird durch die aufgrund der chromatischen Faserdispersion und der nichtlinearen Effekte hervorgerufenen Verzerrungen beschränkt. Hierbei ist unter der regenerationsfrei überbrückbaren Übertragungsreichweite die optische Übertragungsstrecke zu verstehen, über die ein optisches Datensignal übertragen werden kann, ohne daß eine Regeneration bzw. "3R-Regeneration" (Elektronische Datenregeneration hinsichtlich der Amplitude, Flanke und des Taktes eines optisch übermittelten, digitalen Datensignals durchgeführt werden muß. Die regenerationsfrei überbrückbare Übertragungsreichweite wird somit durch das für die Rekonstruktion der Daten des optischen Signals am Ende eines optischen Faserstreckenabschnitts erforderliche Signal-zu-Rausch-Verhältnis bestimmt.

Um derartige Verzerrungen des optischen Datensignals zu kompensieren, werden bei der Übertragung von optischen Signalen beispielsweise über optische Standard-Einmodenfasern geeignete Dispersionskompensationseinheiten vorgesehen bzw. ein an die optische Übertragungsstrecke angepaßtes Dispersionsmanagement betrieben. Unter den Begriff Dispersionsmanagement ist hierbei eine gezielte Anordnung von Dispersionskompensationseinheiten entlang der optischen Übertragungsstrecke beispielsweise an optischen Sendern, an optischen Zwischenverstärkern und/oder an optischen Empfängern sowie die Ermittlung der geeigneten Dispersionskompensationsbeträge der Dispersionskompensationseinheiten zu verstehen.

Optische Übertragungssysteme setzen sich aus mehreren optischen Faserstreckenabschnitten zusammen, in denen die jeweils in den betrachteten optischen Faserstreckenabschnitten hervorgerufenen Faserdispersion mit Hilfe mindestens einer Dispersionskompensationseinheit nahezu vollständig kompensiert wird oder teilweise um einen bestimmten Betrag über- oder unterkompensiert wird.

Derartige Dispersionskompensationseinheiten sind beispielsweise als optische Spezialfasern ausgestaltet, bei denen durch eine spezielle Wahl des Brechzahlindexprofils im Faserkern und in den umliegenden Mantelschichten der optischen Fasern die Dispersion bzw. die Faserdispersion, insbesondere im Übertragungswellenlängenbereich sehr hohe negative Werte annimmt. Mit Hilfe der durch die dispersionskompensierende Faser hervorgerufenen hohen negativen Dispersionswerte können die durch die optischen Übertragungsfasern, beispielsweise eine Standard-Einmodenfaser, hervorgerufenen Dispersionsbeiträge effektiv kompensiert werden. Aus der für die Rekonstruktion des optischen Signals am Ende des optischen Faserstreckenabschnitts erforderlichen Mindest-Augenöffnung des Augendiagramms ("Eye-Opening") bzw. des hierzu erforderlichen Signals-zu-Rausch-Verhältnisses ergibt sich eine maximale, regenerationsfrei überbrückbare Übertragungsreichweite bzw. eine maximale Anzahl N von optischen Faserstreckenabschnitten.

In bislang realisierten optischen Übertragungssystemen werden hierzu unterschiedliche Dispersionsmanagementschemata verfolgt, wobei die optimale Dispersionskompensation einer optischen Übertragungsstrecke durch die Verwendung von vor- und/oder nachkompensierten bzw. unterschiedlich über- oder unterkompensierten optischen Faserstreckenabschnitten durchgeführt werden kann. Abhängig von der jeweiligen zu übertragenden Datenrate, dem Datenformat sowie den Fasereigenschaften wird somit eine Überbrückung einer räumlich definierten Entfernung mit einer festgelegten Anzahl von Faserstreckenabschnitten möglich.

Hierzu ist aus der deutschen Offenlegungsschrift 19945143 ein Dispersionsmanagementschema für ein optische Übertragungssystem bekannt, bei dem optische Signale mit Datenraten um die 10 Gbit/s über eine festgelegte Anzahl von optischen Faserstreckenabschnitten übertragen werden. Zur Erhöhung der regenrationsfrei überbrückbaren Übertragungsreichweite des optischen Übertragungssystems werden die Kompensationsbeträge der Dispersionskompensationseinheiten am Ende jedes optischen Faserstreckenabschnitts derart dimensioniert, daß die verbleibende akkumulierte Restdispersion pro optischen Faserstreckenabschnitt zumindest nahezu gleichmäßig um jeweils denselben Dispersionsbetrag ansteigt, d.h. die für das gesamte optische Übertragungssystem berechnete oder geschätzte akkumulierte Restdispersion wird nahezu gleichmäßig auf die optischen Faserstreckenabschnitte verteilt und hierdurch wird jeder optische Faserstreckenabschnitt um nahezu denselben Kompensationsbetrag unterkompensiert.

Ferner ist aus der deutschen Patentanmeldung 10127345 ein Dispersionsmanagementschema für ein optisches Übertragungssystem bekannt, bei dem optische Signale mit erhöhten Datenraten von mehr als 40 Gbit/s über eine festgelegte Anzahl von optischen Faserstreckenabschnitten übertragen werden. Hierbei werden zur Erhöhung der regenerationsfrei überbrückbaren Übertragungsreichweite die Kompensationsbeträge der Dispersionskompensationseinheiten am Ende jedes optischen Faserstreckenabschnitts derart dimensioniert, daß der erste bis N-te Faserstreckenabschnitt um jeweils annähernd denselben Überkompensationsbetrag überkompensiert ist. Zusätzlich ist der Überkompensationsbetrag der N-ten Dispersionskompensationseinheit derart dimensioniert, daß die akkumulierte Faserdispersion am Ausgang des optischen Übertragungssystem nahezu vollständig kompensiert wird.

Schließlich offenbart die Patentanmeldung GB-A-2 371 160 ein optisches Übertragungssystem, in dem ein Dispersionsmanagementschema angewandt wird. Dieses system besteht aus mehreren optischen Faserstrecken abschnitten mit jeweils einer vorgeschalteten Dispersionskompensationseinheit, die einen negativen Dispersionskompensationsbetrag aufweist.

Bei einer Übertragung von optischen Signalen mit zwei unterschiedlich Datenübertragungsraten, beispielsweise von 10 Gbit/s- und 40 Gbit/s-Signalen, in jeweils einem WDM-Übertragungskanal über ein für die Übertragung einer ersten niederbitratigen Datenübertragungsrate optimiertes optisches Übertragungssystems werden die eine zweite höherbitratige Datenübertragungsrate aufweisenden optischen Signale derart stark verzerrt, daß eine Rekonstruktion dieser optischen Datensignale am Streckenende nicht mehr möglich ist.

Die Aufgabe der vorliegenden Erfindung besteht somit darin, ein optisches Übertragungssystem zur hochbitratigen Übertragung von optischen Signalen anzugeben, dessen Dispersionskompensationseinheiten derart dimensioniert sind, daß die Übertragung von mindestens zwei unterschiedliche Datenübertragungsraten aufweisenden optischen Signalen möglich ist. Die Aufgabe wird ausgehend von dem im Oberbegriff von Patentanspruch 1 angegebenen Merkmalen durch dessen kennzeichnende Merkmale gelöst.

Der wesentliche Aspekt der Erfindung ist darin zu sehen, daß zur Übertragung von eine zweite Datenübertragungsrate aufweisenden zweiten optischen Signalen dem ersten Faserstreckenabschnitt eine Vorkompensationseinheit zur Vorkompensation der zweiten optischen Signale vorgeschaltet ist, die einen Vorkompensationsbetrag im Bereich von 0 ps/nm bis -2000 ps/nm aufweist. Hierdurch können über ein bereits bestehendes optisches Übertragungssystem, welches für die Übertragung von eine erste optische Übertragungsrate - beispielsweise 10 Gbit/s - aufweisenden ersten optischen Signalen dispersionsoptimiert ist, weitere, eine zweite Datenübertragungsrate - beispielsweise 40 Gbit/s - aufweisende zweite optische Signale übertragen werden. Ohne das erfindungsgemäße Vorkompensationsbetragsintervall von 0 ps/nm bis -2000 ps/nm tritt bei der Übertragung aufgrund des nichtlinearen Effektes der Selbstphasenmodulation eine Verzerrung des optischen 40 Gbit/s-Signales auf, was zu einer erheblichen Verringerung der regenerationsfrei überbrückbaren Übertragungsreichweite führt. Durch die erfindungsgemäße Vorkompensation wird diese Verzerrung deutlich reduziert, so daß das optische Übertragungssystem sowohl bei der Übertragung von 10 Gbit/s-Signalen als auch bei der Übertragung von 40 Gbit/s-Signalen für die jeweilige Übertragungsrate nahezu die Übertragungseigenschaften aufweist, die einem für die jeweilige Übertragungsrate dispersionsoptimiertem Übertragungssystem entsprechen.

Ein weiter vorteilhafter Aspekt der Erfindung ist darin zu sehen, daß das optische Übertragungssystem einen von der Höhe der eingekoppelten Leistung des eine zweite Datenübertragungsrate aufweisenden zweiten optischen Signal und dem zur Übertragung verwendeten Fasertyp abhängigen Vorkompensationsbetrag aufweist, wobei die optische Faser als Standard-Einmodenfaser oder als Non-Zero-Dispersion-Shifted-Faser realisiert ist.

Gemäß einer weiteren Ausgestaltung der Erfindung ist die zweite Datenübertragungsrate im Vergleich zur ersten Datenübertragungsrate mindestens doppelt so hoch. Hierbei sind erfindungsgemäß für unterschiedliche Fasertypen unterschiedliche Vorkompensationsbeträge vorteilhaft. Beispielsweise für eine Standard-Einmodenfaser ist der Vorkompensationsbetrag für ein optisches Signal mit einer Datenübertragungsrate von 40 Gbit/s und einem Non-Return-To-Zero-Datenformat näherungsweise durch die folgende Beziehung bestimmt:${\text{D}}_{\text{PC}} \text{= (-11+1, 665·} {\text{P}}_{\text{launch}} \text{/ [dBm])·} {\text{D}}_{\text{inline}} \text{-270 [ps/nm]}$ mit
- P_{launch} =: eingekoppelte Leistung des die zweite Datenübertragungsrate aufweisenden optischen Signals pro Faserstreckenabschnitt und
- Dᵢₙₗᵢₙₑ =: durchschnittlicher Unterkompensationsbetrag der ersten bis N-ten Dispersionskompensationseinheiten.

Dagegen ergibt sich für den Einsatz einer Non-Zero-Dispersion-Shifted-Faser (NZDSF) für ein optisches Signal mit einer Datenübertragungsrate von 40 Gbit/s und einem Non-Return-To-Zero-Datenformat näherungsweise der folgende Zusammenhang:${\text{D}}_{\text{PC}} \text{= (-12,5+1,2·} {\text{P}}_{\text{launch}} \text{/[dBm])·} {\text{D}}_{\text{inline}} \text{- 25 [ps/nm]}$ ebenfalls mit
- P_{launch} =: eingekoppelte Leistung des die zweite Datenübertragungsrate aufweisenden optischen Signals pro Faserstreckenabschnitt und
- Dᵢₙₗᵢₙₑ =: durchschnittlicher Unterkompensationsbetrag der ersten bis N-ten Dispersionskompensationseinheiten.

Vorteilhaft werden durch diese Beziehungen näherungsweise optimierte Vorkompensationswerte für den jeweiligen Fasertyp im erfindungsgemäßen Bereich von 0 ps/nm bis -2000 ps/nm ermittelt, wodurch die durch die nichtlinearen Effekt der Selbstphasenmodulation und die Faserdispersion hervorgerufenen Verzerrungen innerhalb des optischen Übertragungssystems bei der Übertragung des eine zweite, mindestens doppelt so hoch wie die erste Übertragungsrate aufweisenden optischen Signals - beispielsweise eine Übertragungsbitrate von 40 Gbit/s aufweisende optische Signale - deutlich reduziert werden.

Vorteilhaft weisen alle optischen Faserstreckenabschnitte des optischen Übertragungssystems eine Länge zwischen 40 km und 120 km auf.

Vorteilhafte Weiterbildungen und Ausbildungen des erfindungsgemäßen optischen Übertragungssystems sind in den weiteren Patentansprüchen beschrieben.

Die Erfindung soll im folgenden anhand eines Prinzipschaltbildes und mehreren Diagrammen näher erläutert werden.
- Figur 1: x zeigt den prinzipiellen Aufbau eines optischen Übertragungssystems,
- Figur 2: zeigt in einem Diagramm das erfindungsgemäße Dispersionmanagementschema für die eine zweite Datenübertragungsrate aufweisenden zweiten optischen Signalen,
- Figur 3: zeigt in einem Diagramm die Verbesserung der Übertragungseigenschaften des optischen Übertragungssystems durch die erfindungsgemäße Vorkompensation für eine zweite Datenübertragungsrate von 40 Gbit/s über eine Standard-Einmodenfaser,
- Figur 4: zeigt in einem Diagramm Erhöhung der regnerationsfrei überbrückbaren Anzahl der Faserstreckenabschnitte durch die erfindungsgemäße Vorkompensation für eine zweite Datenübertragungsrate von 40 Gbit/s über eine Non-Zero-Dispersion-Shifted-Faser,
- Figur 5: zeigt in einem Diagramm die unterschiedlichen Vorkompensationsbeträge in Abhängigkeit von der Eingangssignalleistung und des Unterkompensationsbetrages für eine zweite Datenübertragungsrate von 40 Gbit/s über eine Standard-Einmodenfaser und
- Figur 6: zeigt in einem Diagramm die unterschiedlichen Vorkompensationsbeträge in Abhängigkeit von der Eingangssignalleistung und des Unterkompensationsbetrages für eine zweite Datenübertragungsrate von 40 Gbit/s über eine Non-Zero-Dispersion-Shifted-Faser.

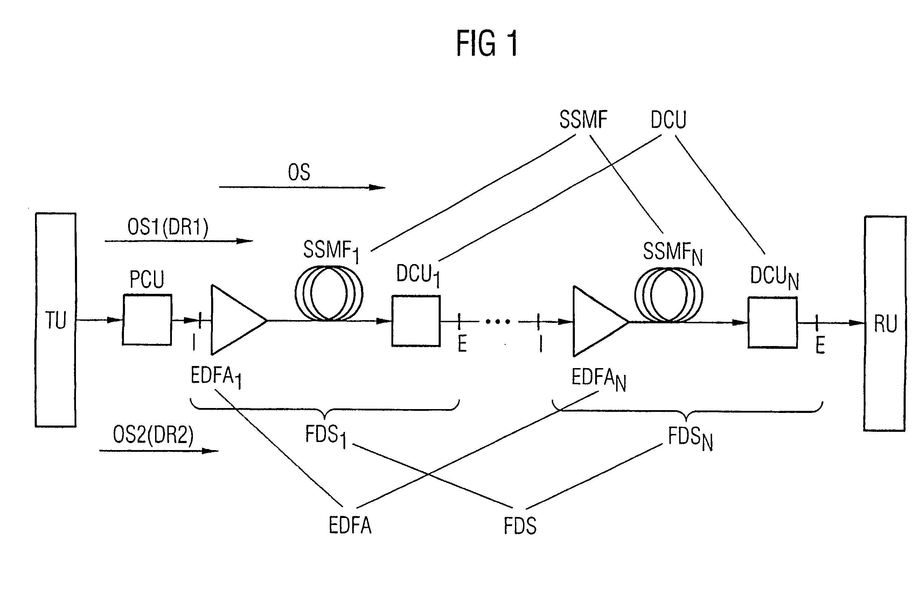

In Figur 1 ist ein optisches Übertragungssystem OTS schematisch dargestellt, das eine optische Sendeeinrichtung TU und eine optische Empfangseinrichtung RU aufweist. Die optische Sendeeinrichtung TU ist über eine optische Vorkompensationseinheit PCU sowie über N optische, jeweils einen Eingang I und einen Ausgang E aufweisende Faserstreckenabschnitte FDS₁ bis FDS_{N} mit der optischen Empfangseinrichtung RU verbunden. Ein Faserstreckenabschnitt FDS weist jeweils einen optischen Verstärker EDFA, eine optische Faser SSMF und eine optische Dispersionskompensationseinheit DCU auf. Unter der optischen Faser SSMF ist eine "Single Mode Fiber" zu verstehen, die beispielweise sowohl als Standard-Einmodenfaser SSMF als auch die Non-Zero-Dispersion-Shifted-Faser NZDSF realisiert sein kann.

In Figur 1 sind beispielhaft ein erster und N-ter optischer Faserstreckenabschnitt FDS₁,FDS_{N} dargestellt, wobei ein zweiter bis N-1-ter Faserstreckenabschnitt FDS₂ bis FDS_{N-1} anhand einer punktierten Linie angedeutet sind. Desweiteren besteht der erste optische Faserstreckenabschnitt FDS₁ aus einem ersten optischen Verstärker EDFA₁, einer ersten optischen Faser SSMF₁, beispielsweise einer optischen Standard-Single-Mode-Faser, sowie aus einer ersten optischen Dispersionskompensationseinheit DCU₁, wobei zwischen der ersten optischen Faser SSMF₁ und der ersten optischen Dispersionskompensationseinheit DCU₁ noch weitere optische Vorverstärker - in Figur 1 nicht dargestellt - vorgesehen werden können. Analog dazu weist der N-te optische Faserstreckenabschnitt FDS_{N} einen N-ten optischen Verstärker EFDA_{N}, eine N-te optische Faser SSMF_{N} und eine N-te optische Dispersionskompensationseinheit DCU_{N} auf. Analog können zwischen N-ter optische Faser SSMF_{N} und N-ter optischer Dispersionskompensationseinheit DCU_{N} weitere optische Vorverstärker - in Figur 1 nicht dargestellt - vorgesehen sein. Für die N-te Dispersionskompensationseinheit DCU_{N} ist zusätzlich die Möglichkeit vorgesehen, jedes der optischen Signale OS1, OS2 getrennt zu kompensieren.

Mit Hilfe der dem ersten optischen Faserstreckenabschnitt FDS₁ vorgeschalteten Vorkompensationseinheit PCU werden ausgewählte optische Datensignale OS einer Vorkompensation mit unterschiedlichen Vorkompensationsbeträgen D_{PC} unterzogen.

Die optischen Datensignale OS werden von der optischen Sendeeinrichtung TU zur Vorkompensationseinheit PCU übermittelt, wobei die optischen Datensignale OS unterschiedliche Datenübertragungsraten DR1,DR2 aufweisen. Im dargestellten Ausführungsbeispiel werden beispielhaft erste optische Datensignale OS1 mit einer ersten optischen Datenübertragungsrate DR1 sowie zweite optische Datensignale OS2 mit einer zweiten optischen Datenübertragungsrate DR2 übertragen, wobei die zweite Datenübertragungsrate DR2 beispielsweise mindestens doppelt so hoch ist wie die erste optische Datenübertragungsrate DR1.

Mit Hilfe der Vorkompensationseinheit PCU werden beispielhaft die zweiten optischen Datensignale OS2 einer Vorkompensation unterzogen, wohingegen die ersten optischen Datensignale OS1 durch die Vorkompensationseinheit PCU "geschleift" werden können. Alternativ können die ersten optischen Datensignale OS1 direkt von der optischen Sendeeinheit TU zum Eingang I des ersten Faserstreckenabschnitts FDS₁ übertragen werden oder ebenfalls der Vorkompensation unterzogen werden.

Die am Ausgang der Vorkompensationseinheit PCU abgegeben optischen Signale OS werden zum Eingang I des ersten optischen Faserstreckenabschnitts FDS₁ übermittelt. Hierbei werden die optischen Signale OS gemultiplext in einem WDM-Signal übertragen werden. Innerhalb des ersten optischen Faserstreckenabschnitts FDS₁ werden die optischen Datensignale OS, d.h. die ersten und zweiten optischen Datensignale OS1, OS2, mit Hilfe des ersten optischen Verstärker EDFA₁ verstärkt und über die erste optische Faser SSMF₁ zur ersten Dispersionskompensationseinheit DCU₁ übertragen. In der ersten Dispersionskompensationseinheit DCU₁ werden die durch die optische Übertragung über die erste optische Faser SSMF₁ hervorgerufenen Signalverzerrungen der optischen Datensignale OS bis auf eine erste Rest-Dispersion Dᵢₙₗᵢₙₑₗ, die in etwa dem Unterkompensationsbetrag Dᵢₙₗᵢₙₑ entspricht, kompensiert.

Die akkumulierte Restdispersion Dₐₖₖ wird durch die Faserdispersion hervorgerufen und liegt am Ende des N-ten Faserstreckenabschnitts FDS_{N} vor. Hierbei wird die akkumulierte Restdispersion Dₐₖₖ aus Gründen der für die Rückgewinnung der Daten aus den optischen Datensignalen OS geforderten Augendiagrammöffnung ("Eye-Opening") am Ende des N-ten Faserstreckenabschnitts FDS_{N} teilweise nicht kompensiert. Der für eine optimale Augenöffnung erforderliche Betrag der Restdispersion Dakk wird durch die nichtlinearen Effekte der optischen Faser SSMF bestimmt und hängt von der Datenübertragungsrate DR1,DR2, dem Datenformat und der mittleren Übertragungsleistung am Anfang eines Faserstreckenabschnitts FDS ab. Dieser Betrag kann in bestimmten Fällen auch Null sein - siehe DE 10127345. Daher ist es beispielsweise in einigen Anwendungsfällen vorteilhaft die zu übertragenden optischen Signale OS1,OS2 bereits vor der N-ten Dispersionskompensationseinheit FDS_{N} zu demultiplexen und die getrennten optischen Signale OS1, OS2 gemäß der für die Übertragung verwendeten Datenübertragungsrate DR1,DR2 unterschiedliche Diserpsionsbeträge aufweisenden N-ten Dispersionkompensationseinheiten DCU_{N} zuzuführen. In anderen Worten: um eine optimale Augendiagrammöffnung zu erhalten ist es vorteilhaft, daß die ersten und zweiten optischen Signale OS1, OS2 am Ende des optischen Übertragungssystem OTS unterschiedlich optimierte Restdispersionen Dₐₖₖ aufweisen. Somit sind die am Ausgang E des N-ten optischen Faserstreckenabschnitts FDS_{N} anliegenden optischen Signale OS nicht vollständig dispersionskompensiert, sondern weisen eine von Ihrer Datenübertragungsrate DR1,DR2 abhänigige verbleibende Restdispersion auf.

Analog dazu werden die optischen Signale OS über die weiteren optischen Faserstreckenabschnitte FDS zum Eingang I des N-ten optischen Faserstreckenabschnittes FDS_{N} übertragen. Hierbei steigt die verbleibende Restdispersion der ersten optischen Signale OS1 pro Faserstreckenabschnitt FDS nahezu gleichmäßig um den vorgegebenen Unterkompensationsbetrag Dᵢₙₗᵢₙₑ an und etnspricht nach dem N-ten Faserstreckenabschnitt FDS_{N} der akkumulierten Restdispersion Dₐₖₖ. Die verbleibende Restdispersion der zweiten optischen Signale OS2 weist jedoch am Ende des optischen Übertragungssystems OTS eine unterschiedliche akkumulierte Restdispersion Dₐₖₖ auf.

Die am Ausgang E des N-ten optischen Faserstreckenabschnitts FDS_{N} abgegebenen optischen Signale OS werden zur optischen Empfangseinrichtung RU übertragen und gegebenenfalls vor der Weiterverarbeitung einer 3R - Regeneration unterzogen - nicht in Figur 1 dargestellt.

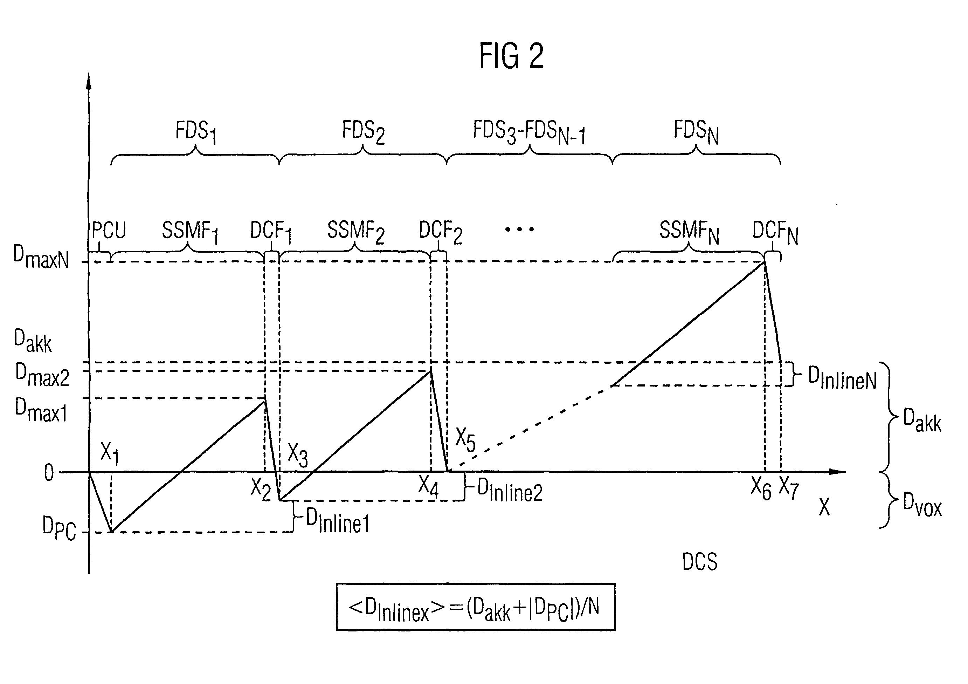

In Figur 2 ist beispielhaft das erfindungsgemäße Dispersionmanagementschema DCS für die zweiten optischen Signale OS2 anhand eines Diagramms schematisch dargestellt. In dem Diagramm sind ein erster, zweiter und N-ter optischer Faserstreckenabschnitt FDS₁, FDS₂, FDS_{N} dargestellt, wobei der erste optische Faserstreckenabschnitt FDS₁ eine erste optische Faser SSMF₁ und eine erste optische Dispersionskompensationseinheit DCF₁, der zweite optische Faserstreckenabschnitt FDS₂ eine zweite optische Faser SSMF₂ und eine zweite optische Dispersionskompensationseinheit DCF₂, der N-te optische Faserstreckenabschnitt FDS_{N} eine N-te optische Faser SSMF_{N} und eine N-te optische Dispersionskompensationseinheit DCF_{N} aufweist.
Der dritte bis (N-1)-te optische Faserstreckenabschnitt FDS₃ bis FDS_{N-1} sind durch strichliert gezeichnete Linien angedeutet. Bei dem dargestellten Ausführungsbeispiel ist beispielsweise die Länge der ersten bis N-ten optischen Faser SSMF₁ bis SSMF_{N} sowie der ersten bis N-ten dispersionskompensierenden Faser DCF₁ bis DCF_{N} nahezu gleich. Diese können jedoch in der Praxis unterschiedliche Längen im Bereich von etwa 40 km bis 120 km aufweisen. Im Falle einer größeren Variation der Längen der Faserstreckenabschnitte FDS kann der auf eine konstante Länge der optischen Fasern SSMF bezogene Unterkompensationsbetrag Dᵢₙₗᵢₙₑ pro Faserstreckenabschnitt FDS wahlweise auch in einen relativen Unterkompensationsbetrag Drel_inline umgerechnet werden. Hierfür wird ausgehend von einer optimalen akkumulierten Restdispersion Dₐₖₖ nach dem N-ten Faserstreckenabschnitt FDS_{N} der jeweilige Unterkompensationsbetrag Dᵢₙₗᵢₙₑₓ für einen beliegigen Faserstreckenabschnitt FDSᵢ aus der Länge L(FDSᵢ) des Faserstreckenabschnitts FDSᵢ und der Gesamtstreckenlänge L_{ges} = L (FDS₁) + L (FDS₂) + ... + L (FDS_{N}) durch folgende Beziehung ermittelt:${\text{D}}_{\text{inlinex}} {\text{= (L (FDS}}_{\text{i}} {\text{) *D}}_{\text{akk}} {\text{) /L}}_{\text{ges}} \text{;}$

Das Diagramm in Figur 2 weist eine horizontale Achse x und eine vertikale Achse D auf, wobei an der horizontalen Achse x die zurückgelegte Übertragungsstrecke und an der vertikalen Achse D der Betrag der Faserdispersion D im jeweiligen optischen Faserstreckenabschnitt FDS angetragen sind

Darüber hinaus zeigt Figur 2, daß die Faserdispersion D der am Eingang der Vorkompensationseinheit PCU anliegenden optischen zweiten Signale OS2 zunächst linear abnimmt und am Ausgang x₁ der Vorkompensationseinheit PCU einen negativen Vorkompensationsbetrag D_{PC} aufweist. Die Faserdispersion D der zweiten optischen Signale OS2 steigt bei der Übertragung über die erste optische Faser SSMF₁ des ersten optischen Faserstreckenabschnitts FDS₁ vom Eingang x₁ nahezu linear zum Ausgang x₂ der ersten optischen Faser SSMF₁ an und weist am Ausgang x₂ einen ersten maximalen Dispersionsbetrag Dₘₐₓ₁ auf. Die bei der Übertragung der zweiten optischen Signale OS über die erste optische Faser SSMF₁ hervorgerufene Faserdispersion D = |D_{PC}| + Dₘₐₓ₁ wird mit Hilfe der ersten Dispersionskompensationseinheit DCF₁ teilweise kompensiert, so daß der am Ausgang x₃ der ersten Dispersionskompensationseinheit DCF₁ vorliegende Dispersionsbetrag D sich um den ersten Restdispersionsbetrag Dᵢₙₗᵢₙₑ₁ von dem Vorkompensationsbetrag D_{PC} unterscheidet. Somit weist der erste optische Faserstreckenabschnitt FDS₁ eine Unterkompensation um den Unterkompensationsbetrag Dᵢₙₗᵢₙₑ auf.

Bei der Übertragung über den zweiten optischen Faserstreckenabschnitt FDS₂ bzw. über dessen zweite optische Faser SSMF₂ nimmt die Faserdispersion D nahezu linear zu und es ergibt sich am Ausgang x₄ der zweiten optischen Faser SSMF₂ ein zweiter maximaler Dispersionsbetrag Dₘₐₓ₂. Der zweite maximale Dispersionsbetrag Dₘₐₓ₂ wird mit Hilfe der zweiten Dispersionskompensationseinheit DCF₂ derart unterkompensiert, daß die verbleibende zweite Restdispersion Dᵢₙₗᵢₙₑ₂ bezogen auf dem zweiten optischen Faserstreckenabschnitt FDS₂ wiederum annähernd dem Unterkompensationsbetrag Dᵢₙₗᵢₙₑ entspricht.

Analog hierzu wird das erfindungsgemäße Dispersionsmanagementschema in den dritten bis N-1-ten optischen Faserstreckenabschnitten FDS₃ bis FDS_{N-1} realisiert.

Die in dem N-ten optischen Faserstreckenabschnitt DCF_{N} eingespeisten optischen Signale OS werden über die N-te optische Faser SSMF_{N} des optischen Übertragungssystems OTS übertragen und mit Hilfe der N-ten Dispersionskompensationseinheit DCF_{N} kompensiert. Anhand Figur 2 wird deutlich, daß der Dispersionbetrag D weiterhin zunimmt und am Ende der N-ten optischen Faser x₆ einen N-ten maximalen Dispersionsbetrag D_{maxN} aufweist. Mit Hilfe der vierten Dispersionskompensationseinheit DCF₄ wird der N-te maximale Dispersionsbetrag D_{maxN} auf den Betrag der akkumulierten Restdispersion Dₐₖₖ kompensiert. Die dargestellte akkumulierte Restdispersion Dₐₖₖ betrifft die die erste Datenübertragungsrate DR1 aufweisenden ersten optischen Signale OS1. Der optimale Restdispersionsbetrag Dₐₖₖ der zweiten optischen Signale OS2 kann hierzu unterschiedlich sein - wie oben beschrieben. Um eine hinsichtlich der zweiten optischen Signale OS2 optimale akkumulierte Restdispersion Dₐₖₖ zu erhalten, kann eine separate Dispersionskompensation der zweiten optischen Signale OS2 zur Erzeugung eines optimalen Augendiagrammes am Ausgang E des optischen Übertragungssystems OTS erforderlich sein kann (in Figur 2 nicht dargestellt).

Durch die Vorkompensation der zweiten optischen Signale OS2 und die nahezu gleichmäßige verteilte Unterkompensation innerhalb der Faserstreckenabschnitte FDS wird die regenerationsfrei überbrückbare Übertragungsreichweite x₇ wesentlich erhöht, so daß nahezu dieselbe Übertragungsreichweite erreicht wird.

Der in Figur 2 erkennbare, symmetrische Aufbau des Netzmanagementschemas DCS ermöglicht zusätzlich eine bidirektionale Datenübertragung über die betrachteten Faserstreckenabschnitte FDS, wobei hierfür die Vorkompensationseinheit PCU und ein eventuell vorgesehene separate Nachkompensation der zweiten optischen Signale OS2 getrennt betrachtet wird.

Zusätzlich kann ein eine optische Faser SSMF und eine Dispersionskompensationseinheit DCF aufweisender Faserstreckenabschnitt FDS als optisches Übertragungsmodul ausgestaltet sein. Das optische Übertragungssystem OTS wird dann durch eine Serienschaltung derartiger optischer Übertragungsmodule gebildet.

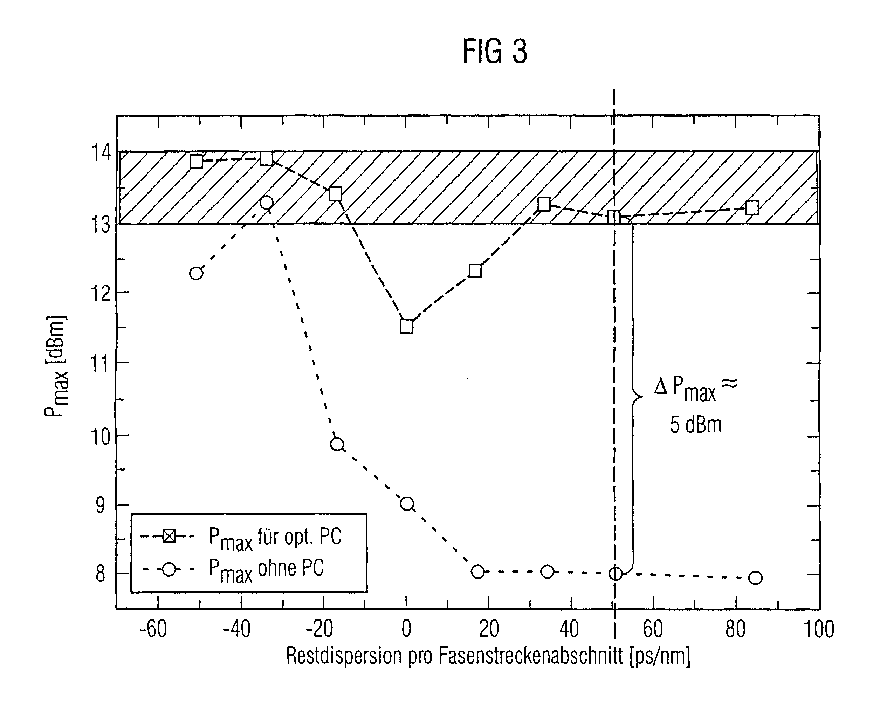

In Figur 3 wird in einem Diagramm die Verbesserung des Übertragungsverhaltens des optischen Übertragungssystems OTS durch die Vorkompensation der zweiten optischen Signale OS2 dargestellt.

Im Diagramm sind an der horizontalen Achse der ausgewählte Unterkompensationsbetrag Dᵢₙₗᵢₙₑ und an der vertikalen Achse die maximale Leistung Pₘₐₓ der übertragenen zweiten optischen Signale OS2 angetragen. Die maximale Leistung Pₘₐₓ ist die Leistung, die in ein nur einen optischen Faserstreckenabschnitt FDS aufweisenden optisches Übertragungssystem OTS maximal eingekoppelt werden kann, so daß das übertragene optische Signal OS am Ende des einzigen Faserstreckenabschnitts FDS eine derartig geringe Verzerrung aufweist, daß das optische Signal OS vollständig rekonstruiert werden kann. Die Anzahl N der Faserstreckenabschnitte FDS, die mit einem optischen Übertragungssystem OTS mit einer bestimmten maximalen Leistung Pₘₐₓ überbrückt werden kann, errechnet sich wie folgt:${\text{P}}_{\text{max}} {\text{= 10*log(N) + P}}_{\text{launch}}$ mit
- P_{launch} =: eingekoppelt Leistung pro Faserstreckenabschnitt FDS.

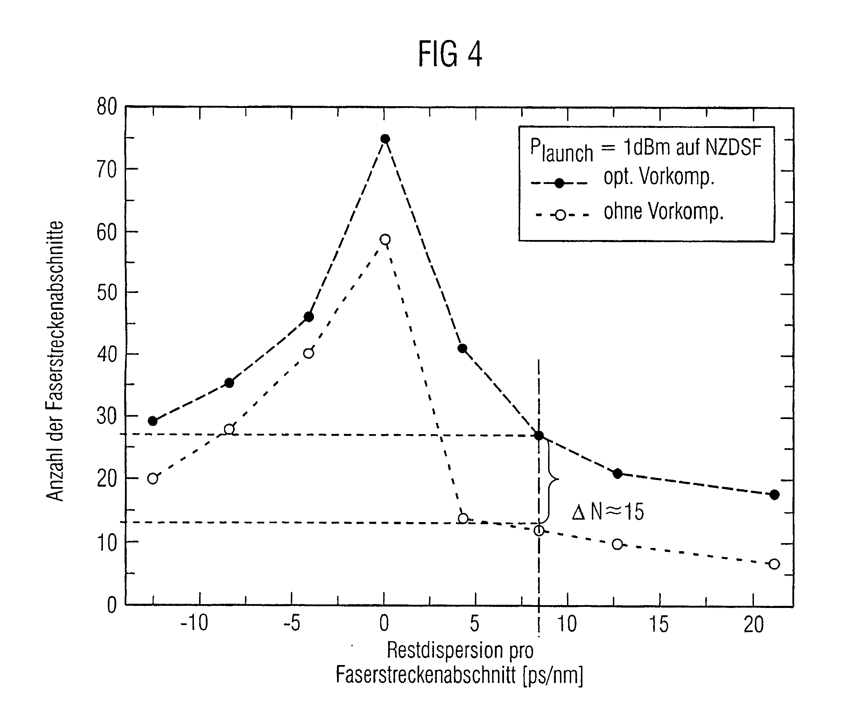

In Figur 3 und in den folgenden Figuren 4 bis 6 werden Leistungswerte in dBm angegeben, eine zehnerlogarithmische Skala bezogen auf die Leistung von 1mW. Hierfür gilt folgende Umrechnungsbeziehung:$\text{Signalleistung[in dBm] = 10*log(Signalleistung[in mW])}$

Somit entspricht 1dBm einer Leistung von ungefähr 1,258 mW bzw. umgekehrt 1mW ungefähr 0 dBm.

Im betrachteten Ausführungsbeispiel werden über ein für die Übertragung von ersten optischen Signalen OS1 dispersionoptimiertes optisches Übertragungssystem OTS1 zweite optische Signals OS2 übertragen. Die optischen Fasern SSMF weisen eine durchschnittliche Faserdispersion von 17 ps/(nm*km) auf. Hierbei weist ein optischer Faserstreckenabschnitt FDS beispielsweise eine Länge von ca. 100 km auf. Beträgt nun der Unterkompensationsbetrag Dᵢₙₗᵢₙₑ pro optischen Faserstreckenabschnitt FDS annähernd beispielsweise 51 ps/nm so ergibt sich eine Verbesserung der maximalen Leistung Pₘₐₓ des zweiten optischen Signals OS2 von ungefähr 5 dBm gegenüber der Übertragung ohne Vorkompensation der zweiten optischen Signale OS2. Hierdurch wird die regenerationsfrei überbrückbare Übertragungsreichweite wesentlich erhöht. Somit können sowohl erste optische Signale OS1 mit einer ersten optischen Übertragungsrate von beispielsweise 10 Gbit/s und zweite optische Signale OS2 mit einer zweiten Übertragungsrate von beispielsweise 40 Gbit/s über ein optisches Übertragungssystem OTS nahezu über die der Datenübertragungsrate DR2 entsprechenden maximalen Entfernung übertragen werden.

Zusätzlich ist aus Figur 3 ersichtlich, welches Dispersionsmanagementschema ohne erfindungsgemäße Vorkompensation eingesetzt werden müßte, um eine maximale Reichweite des optischen Übertragungssystems OTS bei der Übertragung der zweiten optischen Signale OS2 zu erreichen. So ist eine Restdispersion pro Faserstreckenabschnitt von etwa 34 ps/nm erforderlich, um eine maximale Leistung Pₘₐₓ von 13,1 dBm zu erreichen.

Bei der Übertragung von höherbitratigen zweiten optischen Signalen OS2 über ein für niederbitratige optische Signale OS1 dispersionsoptimiertes optisches Übertragungssystem OTS wird die optische Systemreichweite verringert, so daß sich das vorgestellte Übertragungssystem insbesondere auch für den Anwendungsfall eignet, bei dem mehrere beispielsweise 40 Gbit/s-Signale über eine oder mehrere optische Teil-Übertragungsstrecken eines für beispielsweise 10 Gbit/s dispersionsoptimiertes Übertragungssystem OTS übertragen werden.

In einem weiteren Diagramm - Figur 4 - wird die regenerationsfrei überbrückbare Anzahl N der kompensierten Faserstreckenabschnitte FDS in Abhängigkeit von dem Unterkompensationsbetrages Dᵢₙₗᵢₙₑ pro Faserstreckenabschnitt FDS für optische Signale OS mit einer Eingangssignalleistung P_{launch} von 1dBm bei der Übertragung über eine Non-Zero-Dispersion-Shifted-Faser NZDSF dargestellt. An der horizontalen Achse ist die Rest-Dispersion Dᵢₙₗᵢₙₑ pro Faserstreckenabschnitt FDS des optischen Übertragungssystems OTS und an der vertikalen Achse die Anzahl N der optischen Faserstreckenabschnitte FDS des optischen Übertragungssystems OTS angetragen.

Aus dem Diagramm ist ersichtlich, daß durch die erfindungsgemäße Vorkompensation sich eine Erhöhung der regenerationsfrei überbrückbaren Übertragungsreichweite erzielen läßt. Die regenerationsfrei überbrückbare Übertragungsreichweite wird in Figur 4 durch die Anzahl N der kompensierten Faserstreckenabschnitte FDS des optischen Übertragungssystems OTS verdeutlicht. Beispielsweise wird bei einer gleichmäßigen Unterkompensation um einen Unterkompensationsbetrag Dᵢₙₗᵢₙₑ von 7 ps/nm pro Faserstreckenabschnitt FDS und unter Einsatz der erfindungsgemäßen Vorkompensationseinheit PCU mehr als eine Verdopplung der Übertragungsreichweite von 12 auf 27 Faserstreckenabschnitte FDS erreicht. Somit können bei gleicher Eingangsleistung P_{launch} der zweiten optischen Signale OS2 diese durch die erfindungsgemäße Vorkompensation über weitere 15 Faserstreckenabschnitte FDS übertragen werden.

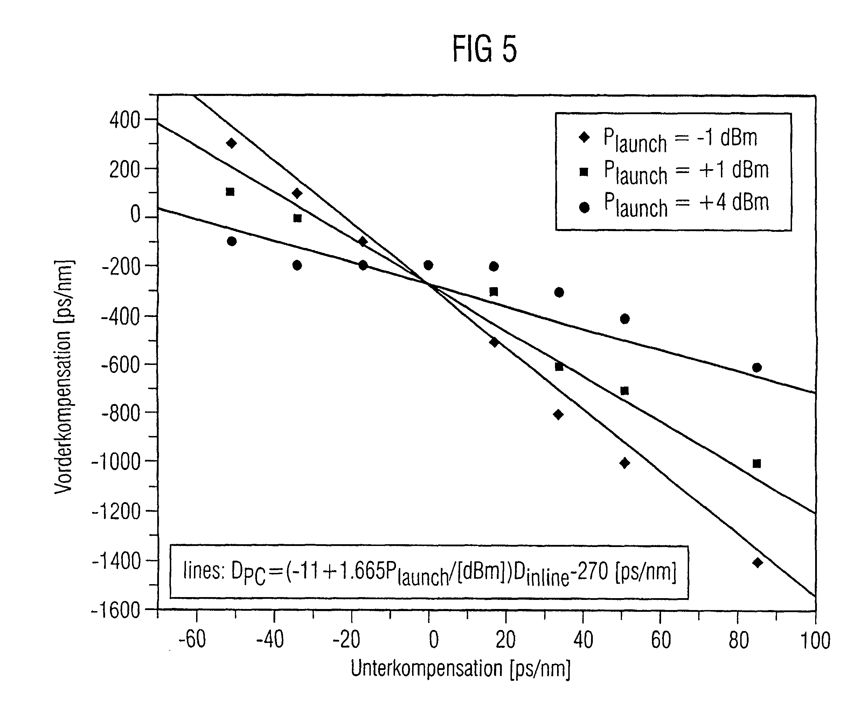

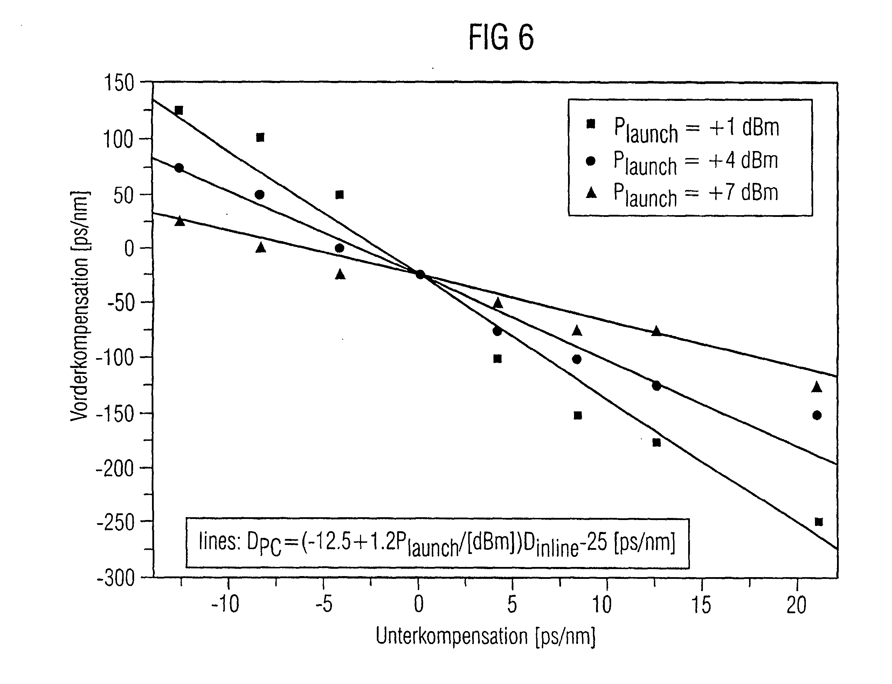

In den Figuren 5 und 6 wird jeweils in einem Diagramm die Beziehung zwischen dem Unterkompensationsbetrag Dᵢₙₗᵢₙₑ, der Eingangsleistung P_{launch} der zweiten optischen Signale OS2 und des sich hieraus ergebenden optimalen Vorkompensationsbetrages D_{PC} für die Standard-Einmodenfaser SSMF (Figur 5) und die Non-Zero-Dispersion-Shifted-Faser NZDSF (Figur 6) dargestellt. Hierzu wird an der horizontalen Achse der gewählte Unterkompensationsbetrag Dᵢₙₗᵢₙₑ angetragen und an der vertikalen Achse der Vorkompensationsbetrag D_{PC} aufgeführt. Ferner sind jeweils drei Graphen für unterschiedliche Eingangsleistungen P_{launch} beispielhaft dargestellt. Die im Ausführungsbeispiel verwendete zweite Datenübertragungsrate DR2 beträgt 40 Gbit/s unter Verwendung des Non-Return-To-Zero-Datenformats.

In Figur 5 wird ein erster Graph durch rautenförmige Meßpunkte dargestellt, der den Zusammenhang zwischen dem Unterkompensationsbetrag Dᵢₙₗᵢₙₑ und dem Vorkompensationsbetrag D_{PC} für eine Eingangsleistung P_{launch} von -1 dBm anzeigt. Der Verlauf für eine Eingangsleistung P_{launch} von 1 dBm wird durch einen quadratförmige Meßpunkte aufweisenden zweiten Graphen dargestellt und der Verlauf für eine Eingangsleistung P_{launch} von +4 dBm wird durch eine kreisförmige Meßpunkte aufweisenden dritten Graphen angezeigt. Ferner ergibt sich durch Interpolation der Meßpunkte folgende mathematische Beziehung zur Ermittlung des optimalen Vorkompensationsbetrages D_{PC} ausgehend von dem verwendeten Unterkompensationsbetrages Dᵢₙₗᵢₙₑ und der Eingangsleistung P_{launch} der zweiten optischen Signale OS2 für die Standard-Einmodenfaser:${\text{D}}_{\text{PC}} \text{= (-11+1, 665·} {\text{P}}_{\text{launch}} \text{/[dBm])·} {\text{D}}_{\text{inline}} \text{- 270 [ps/nm]}$

Mit Hilfe dieser Beziehung wird auf einfache Art und Weise der Vorkompensationsbetrag D_{PC} für einen festgelegten Unterkompensationsbetrag Dᵢₙₗᵢₙₑ und eine festgelegte Eingangssignalleistung P_{launch} pro optischen Faserstreckenabschnitt FDS ermittelt. Hierdurch wird die für die Übertragung eines eine zweite Datenübertragungsrate DR2 aufweisenden zweiten optischen Signals OS2 über ein für eine erste Datenübertragungsrate DR1 optimiertes optisches Übertragungssystem OTS erforderliche Vorkompensationsbetrag D_{PC} abgeschätzt.

In Figur 6 werden analog die Graphen für die Übertragung der zweiten optischen Signale OS2 über eine Non-Zero-Dispersion-Shifted-Faser NZDSF dargestellt. Der Zusammenhang zwischen dem Unterkompensationsbetrag Dᵢₙₗᵢₙₑ und dem Vorkompensationsbetrag D_{PC} für eine Eingangsleistung P_{launch} von +1 dBm wird in einem ersten Graphen durch quadratförmige Meßpunkte dargestellt. Der Verlauf für eine Eingangsleistung P_{launch} von +4 dBm wird durch einen kreisförmige Meßpunkte aufweisenden zweiten Graphen dargestellt und der Verlauf für eine Eingangsleistung P_{launch} von +7 dBm wird durch eine dreieckfömige Meßpunkte aufweisenden dritten Graphen aufgezeigt. Durch Interpolation dieser Meßpunkte folgt eine mathematische Beziehung zur Ermittlung des optimalen Vorkompensationsbetrages D_{PC} ausgehend von dem vorliegenden Unterkompensationsbetrag Dᵢₙₗᵢₙₑ und der Eingangsleistung P_{launch} der zweiten optischen Signale OS2 für die Non-Zero-Dispersion-Shifted-Faser NZDSF. Diese lautet:${\text{D}}_{\text{PC}} \text{= (-12, 5+1, 2·} {\text{P}}_{\text{launch}} \text{/ [dBm]) ·} {\text{D}}_{\text{inline}} \text{- 25 [ps/nm]}$

Hierdurch wird der für das bestehende optische Übertragungssystem OTS erforderliche Vorkompensationsbetrag D_{PC} komfortabel abgeschätzt und durch Vorschalten einer diesen Betrag aufweisenden Vorkompensationseinheit PCU wird die Signalverzerrungen innerhalb der optischen Non-Zero-Dispersion-Shifted-Faser NZDSF bei Übertragung von zweiten optischen Signalen OS2 reduziert, wodurch die regenerationsfrei überbrückbare Übertragungsreichweite wesentlich erhöht wird.

## Patentansprüche

1. Optisches Übertragungssystem (OTS) zur Übertragung von optischen Signalen (OS) bestehend aus N optischen Faserstreckenabschnitten (FDS) mit jeweils einer optischen Faser (SSMF) und einer Dispersionskompensationseinheit (DCU),
bei dem zur Übertragung von eine erste Datenübertragungsrate (DR1) aufweisenden ersten optischen Signalen (OS1) die Kompensationsbeträge der ersten bis N-ten Dispersionskompensationseinheiten (DCU₁ bis DCU_{N}) derart dimensioniert sind, daß der erste bis N-te Faserstreckenabschnitt (FDS₁ bis FDS_{N}) jeweils um annähernd denselben Unterkompensationsbetrag (Dᵢₙₗᵢₙₑ) unterkompensiert ist,
**dadurch gekennzeichnet,**
**daß** zur Übertragung von eine zweite Datenübertragungsrate (DR2) aufweisenden zweiten optischen Signalen (OS2) dem ersten Faserstreckenabschnitt (FDS₁) eine Vorkompensationseinheit (PCU) zur Vorkompensation der zweiten optischen Signale (OS2) vorgeschaltet ist, die einen Vorkompensationsbetrag (D_{PC}) im Bereich von 0 ps/nm bis -2000 ps/nm aufweist.

2. Optisches Übertragungssystem nach Anspruch 1,
**dadurch gekennzeichnet,**
**daß** die zweite Datenübertragungsrate (DR2) im Vergleich zur ersten Datenübertragungsrate (DR1) mindestens doppelt so hoch ist.

3. Optisches Übertragungssystem nach Anspruch 1 oder 2,
**dadurch gekennzeichnet,**
**daß** der Vorkompensationsbetrag (D_{PC}) abhängig von der Höhe der eingekoppelten Leistung (P_{launch}) des eine zweite Datenübertragungsrate aufweisenden zweiten optischen Signal (OS2) und dem zur Übertragung verwendeten Fasertyp ist.

4. Optisches Übertragungssystem nach einem der Ansprüche 1 bis 3,
**dadurch gekennzeichnet,**
**daß** die optische Faser eine Standard-Einmodenfaser (SSMF) oder eine Non-Zero-Dispersion-Shifted-Faser (NZDSF) ist.

5. Optisches Übertragungssystem nach Anspruch 4,
**dadurch gekennzeichnet,**
**daß** der Vorkompensationsbetrag (D_{PC}) für eine Standard-Einmodenfaser (SSMF) näherungsweise durch die folgende Beziehung bestimmt ist:${\text{D}}_{\text{PC}} \text{= (-11+1, 665·} {\text{P}}_{\text{launch}} \text{/[dBm])·} {\text{D}}_{\text{inline}} \text{- 270 [ps/nm]}$ mit
P_{launch} = eingekoppelte Leistung der die zweite Datenübertragungsrate aufweisenden optischen Signale pro Faserstreckenabschnitt und
Dᵢₙₗᵢₙₑ = durchschnittlicher Unterkompensationsbetrag der ersten bis N-ten Dispersionskompensationseinheiten

6. Optisches Übertragungssystem nach Anspruch 4,
**dadurch gekennzeichnet,**
**daß** der Vorkompensationsbetrag (D_{PC}) für eine Non-Zero-Dispersion-Shifted-Faser (NZDSF) näherungsweise durch die folgende Formel bestimmt ist:${\text{D}}_{\text{PC}} \text{= (-12,5+1,2·} {\text{P}}_{\text{launch}} \text{/[dBm])·} {\text{D}}_{\text{inline}} \text{- 25 [ps/nm]}$ mit
P_{launch} = eingekoppelte Leistung der die zweite Datenübertragungsrate aufweisenden optischen Signale pro Faserstreckenabschnitt und
Dᵢₙₗᵢₙₑ = durchschnittlicher Unterkompensationsbetrag der ersten bis N-ten Dispersionskompensationseinheiten.

7. Optisches Übertragungssystem nach einem der Ansprüche 4 bis 6,
**dadurch gekennzeichnet,**
**daß** der Unterkompensationsbetrag (Dᵢₙₗᵢₙₑ) bei der Übertragung von optischen Signalen (OS) über eine Standard-Einmodenfaser (SSMF) im Bereich von 10 bis 80 ps/nm und über eine Non-Zero-Dispersion-Shifted-Faser (NZDSF) im Bereich von 5 bis 60 ps/nm liegt.

8. Optisches Übertragungssystem nach einem der Ansprüche 1 bis 7,
**dadurch gekennzeichnet,**
**daß** die optischen Faserstreckenabschnitte (FDS₁ bis FDS_{N}) des optischen Übertragungssystems (OTS) eine Länge zwischen 40 km und 120 km aufweisen.

9. Optisches Übertragungssystem nach einem der Ansprüche 1 bis 8,
**dadurch gekennzeichnet,**
**daß** ein eine optische Faser (SSMF₁) und eine Dispersionskompensationseinheit (DCF₁) aufweisender Faserstreckenabschnitt (FDS₁) ein optisches Übertragungsmodul bildet und ein optisches Übertragungssystem (OTS) mehrere, in Serie angeordnete optische Übertragungsmodule aufweist.

10. Optisches Übertragungssystem nach einem der Ansprüche 1 bis 9,
**dadurch gekennzeichnet,**
**daß** das optische Übertragungssystem (OTS) einen bidirektionalen Betriebsmodus aufweist.

## Claims

1. Optical transmission system (OTS) for transmitting optical signals (OS) consisting of N lengths of optical fibre (FDS), each comprising an optical fibre (SSMF) and a dispersion compensation unit (DCU), in which in order to transmit first optical signals (OS1) having a first data transmission rate (DR1), the compensating amounts of the first to N-th dispersion compensation units (DCU₁ to DCU_{N}) are dimensioned in such a way that the first to N-th lengths of fibre (FDS₁ to FDS_{N}) are respectively under-compensated by approximately the same under-compensation amount (Dᵢₙₗᵢₙₑ),
**characterised in that**
in order to transmit second optical signals (OS2) having a second data transmission rate (DR2), a pre-compensation unit (PCU) for pre-compensating the second optical signals (OS2) is mounted upstream of the first length of fibre (FDS₁), said pre-compensation unit (PCU) having a pre-compensating amount (D_{PC}) of between 0 ps/nm and -2000 ps/nm.

2. Optical transmission system according to claim 1,
**characterised in that**
the second data transmission rate (DR2) is at least double the first data transmission rate (DR1).

3. Optical transmission system according to claim 1 or 2,
**characterised in that**
the pre-compensation amount (D_{PC}) is dependent on the size of the launch power (P_{launch}) of the second optical signal (OS2) having a second data transmission rate, and on the type of fibre used for transmission.

4. Optical transmission system according to one of the claims 1 to 3,
**characterised in that**
the optical fibre is a standard single mode fibre (SSMF) or a non-zero dispersion-shifted fibre (NZDSF).

5. Optical transmission system according to claim 4,
**characterised in that** the pre-compensation amount (D_{PC}) for a standard single mode fibre (SSMF) is defined to a close approximation by the following relation:${\text{D}}_{\text{PC}} \text{= (-11+1.665•} {\text{P}}_{\text{launch}} \text{/ [dBm] ) •} {\text{D}}_{\text{inline}} \text{-270 [ps/nm]}$ where
*P*_{launch} = launch power of the optical signals having the second data transmission rate, per length of optical fibre, and
*D*ᵢₙₗᵢₙₑ = average under-compensation amount of the first to N-th dispersion compensation units.

6. Optical transmission system according to claim 4,
**characterised in that** the pre-compensation amount (D_{PC}) for a non-zero dispersion-shifted fibre (NZDSF) is defined to a close approximation by the following equation:${\text{D}}_{\text{PC}} \text{= (-12.5+1.2•} {\text{P}}_{\text{launch}} \text{/ [dBm] ) •} {\text{D}}_{\text{inline}} \text{-25 [ps/nm]}$ where
*P*_{launch} = launch power of the optical signals having the second data transmission rate, per length of optical fibre, and
Dᵢₙₗᵢₙₑ = average under-compensation amount of the first to N-th dispersion compensation units.

7. Optical transmission system according to one of the claims 4 to 6,
**characterised in that**
the under-compensation amount (Dᵢₙₗᵢₙₑ) during the transmission of optical signals (OS) over a standard single mode fibre (SSMF) is in the range 10 to 80 ps/nm, and over a non-zero dispersion-shifted fibre (NZDSF) is in the range 5 to 60 ps/nm.

8. Optical transmission system according to one of the claims 1 to 7,
**characterised in that**
the lengths of optical fibre (FDS₁ to FDS_{N}) in the optical transmission system (OTS) are between 40 km and 120 km long.

9. Optical transmission system according to one of the claims 1 to 8,
**characterised in that** an optical fibre (SSMF₁) and a length of fibre (DCF₁) having a dispersion compensation unit (DCF₁) form an optical transmission module, and an optical transmission system (OTS) consists of a plurality of optical transmission modules arranged in series.

10. Optical transmission system according to one of the claims 1 to 9,
**characterised in that**
the optical transmission system (OTS) has a bi-directional operating mode.

## Revendications

1. Système de transmission optique (OTS) pour la transmission de signaux optiques (OS), comprenant N sections de trajets de fibres optiques (FDS) ayant respectivement une fibre optique (SSMF) et une unité de compensation de dispersion (DCU), dans lequel, pour la transmission de premiers signaux optiques (OS1) présentant un premier débit de transmission de données (DR1), les valeurs de compensation de la première jusqu'à la N-ième unité de compensation de dispersion (DCU₁ à DCU_{N}) sont dimensionnées de telle manière que la première à la N-ième sections de trajets de fibres (FDS₁ à FDS_{N}) sont respectivement sous-compensées d'approximativement la même valeur de sous-compensation (Dᵢₙₗᵢₙₑ),
**caractérisé en ce**
**que**, pour la transmission de deuxièmes signaux optiques (OS2) présentant un deuxième débit de transmission de données (DR2), une unité de pré-compensation (PCU) est installée en amont de la première section de trajet de fibre (FDS₁) pour la pré-compensation des deuxièmes signaux optiques (OS2), cette unité de pré-compensation présentant une valeur de pré-compensation (D_{PC}) située dans la plage de 0 ps/nm à -2000 ps/nm.

2. Système de transmission optique selon la revendication 1,
**caractérisé en ce**
**que** le deuxième débit de transmission de données (DR2) est au moins le double en comparaison avec le premier débit de transmission de données (DR1).

3. Système de transmission optique selon la revendication 1 ou 2,
**caractérisé en ce**
**que** la valeur de pré-compensation (D_{PC}) dépend du niveau de la puissance injectée (P_{launch}) du deuxième signal optique (OS2) présentant un deuxième débit de transmission de données ainsi que du type de fibre utilisé pour la transmission.

4. Système de transmission optique selon l'une quelconque des revendications 1 à 3,
**caractérisé en ce**
**que** la fibre optique est une fibre standard unimodale (SSMF) ou une fibre Non-Zero-Dispersion-Shifted-Fibre (NZDSF).

5. Système de transmission optique selon la revendication 4,
**caractérisé en ce que**
la valeur de pré-compensation (D_{PC}) pour une fibre standard unimodale (SSMF) est déterminée approximativement par la relation suivante :${\text{D}}_{\text{PC}} \text{= (-11-t-1, 665 ·} {\text{P}}_{\text{launch}} \text{/ [dBm]) •} {\text{D}}_{\text{inline}} \text{- 270 [ps/nm]}$ où
*P*_{launch} = puissance injectée des signaux optiques présentant le deuxième débit de transmission de données, par section de trajet de fibre
*D*ᵢₙₗᵢₙₑ = valeur moyenne de sous-compensation de la première à la N-ième unité de compensation de dispersion

6. Système de transmission optique selon la revendication 4,
**caractérisé en ce**
**que** la valeur de pré-compensation (D_{PC}) pour une fibre Non-Zero-Dispersion-Shifted-Fibre (NZDSF) est déterminée approximativement par la formule suivante :${\text{D}}_{\text{PC}} \text{= (-12, 5-1-1,2·} {\text{P}}_{\text{launch}} \text{/ [dBm]) •} {\text{D}}_{\text{inline}} \text{- 25 [ps/nm]}$ où
*P*_{launch} = puissance injectée des signaux optiques présentant le deuxième débit de transmission de données, par section de trajet de fibre et
Dᵢₙₗᵢₙₑ = valeur moyenne de sous-compensation de la première à la N-ième unité de compensation de dispersion.

7. Système de transmission optique selon l'une quelconque des revendications 4 à 6,
**caractérisé en ce**
**que** la valeur de sous-compensation (Dᵢₙₗᵢₙₑ) lors de la transmission de signaux optiques (OS) par l'intermédiaire d'une fibre standard unimodale (SSMF), est située dans la plage de 10 à 80 ps/nm et dans la plage de 5 à 60 ps/nm lors de la transmission par l'intermédiaire d'une fibre Non-Zero-Dispersion-Shifted-Fibre (NZDSF).

8. Système de transmission optique selon l'une quelconque des revendications 1 à 7,
**caractérisé en ce**
**que** les sections de trajets de fibres optiques (FDS₁ à FDS_{N}) du système de transmission optique (OTS) présentent une longueur comprise entre 40 km et 120 km.

9. Système de transmission optique selon l'une quelconque des revendications 1 à 8,
**caractérisé en ce**
**qu'**une section de trajet de fibre (FDS₁) présentant une fibre optique (SSMF₁) et une unité de compensation de dispersion (DCF₁) forme un module de transmission optique et en ce qu'un système de transmission optique (OTS) présente plusieurs modules de transmission optiques disposés en série.

10. Système de transmission optique selon l'une quelconque des revendications 1 à 9,
**caractérisé en ce que**
le système de transmission optique (OTS) présente un mode de fonctionnement bidirectionnel.
